# EUROPEAN PATENT APPLICATION

(11) **EP 4 706 814 A1**
(43) Date of publication of application: **11.03.2026**
(21) Application number: 25805585.4
(22) Date of filing: 28.05.2025
(51) Int. Cl.: B01J 19/24, B01J 19/00, B01J 8/02

(54) **ELECTRICALLY HEATED REACTOR**

(30) Priority: 29.05.2024 KR 20240070385
(71) Applicant: LG Chem, Ltd., Seoul 07336 (KR)
(72) Inventor: PARK, Hongseok, Daejeon 34122 (KR); KANG, Mooseong, Daejeon 34122 (KR)
(74) Representative: Hoffmann Eitle
(86) International application number: PCT/KR2025/007279
(87) International publication number: WO 2025/249909

(57) **Abstract**

An electric heating reactor is disclosed. The electrical heating reactor may include a reaction tube having an inlet formed at one end and an outlet formed at the other end, and having a passage formed inside through which a reactant passes; a power source configured to supply a power to the reaction tube to heat the reactant passing through the passage; and a pair of conductive sockets connected to the power source via a wire to allow a current to flow through the reaction tube, wherein the reaction tube may include a plurality of tube sections having a resistivity and a length, and the resistivity of one tube may be different from that of the adjacent other tube, and the length of one tube is equal to or different from that of the other tube.

## Description

### [Technical Field]

### CROSS-REFERENCE TO RELATED APPLICATION

This application claims priority to and the benefit of Korean Patent Application No. 10-2024-0070385 filed with the Korean Intellectual Property Office on May 29, 2024, the entire contents of which are incorporated herein by reference.

The present disclosure relates to an electric heating reactor, and more particularly, to an electric heating reactor capable of optimally controlling a temperature within the reactor by utilizing an electric heating technology.

### [Background Art]

In chemical industries, various facilities (e.g., crackers, reformers, reactors, and boilers) are maintained at a high temperature by using natural gas as a fuel. However, heating due to burning of natural gas is not only inefficient in terms of energy consumption, but also a major source of carbon emissions. Therefore, efforts are being made to replace the heating method through combustion of natural gas with an electric heating method.

In addition, heating by the combustion causes local temperature deviations due to a heat transfer by a radiation, and a temperature gradient may occur depending on the structure and location of the heating source and the reactor, which may affect reaction products, etc. Therefore, a technology is needed to optimally control the temperature inside the reactor by utilizing an electric heating.

The above information disclosed in this Background section is only for enhancement of understanding of the background of the disclosure, and therefore it may contain information that does not form the prior art that would already be known to a person of ordinary skill in the art.

### [Disclosure]

### [Technical Problem]

An embodiment of the present disclosure seeks to provide an electric heating reactor capable of optimally controlling the temperature within the reactor by utilizing an electric heating technology.

### [Technical Solution]

An electrical heating reactor according to an embodiment may include a reaction tube having an inlet formed at one end and an outlet formed at the other end, and having a passage formed inside through which a reactant passes; a power source configured to supply a power to the reaction tube to heat the reactant passing through the passage; and a pair of conductive sockets connected to the power source via a wire to allow a current to flow through the reaction tube, wherein the reaction tube includes a plurality of tube sections, each having a resistivity and a length, and the resistivity of one tube is different from that of the adjacent other tube, and the length of one tube is equal to or different from that of the other tube.

A temperature gradient within the reaction tube may be obtained by controlling the resistivity and the length of each of the plurality of tube sections.

The resistivity of one tube section relatively close to the inlet may be less than or equal to the resistivity of another tube section relatively close to the outlet so as to obtain the temperature gradient in which the temperature increases from the inlet to the outlet.

The lengths of the plurality of tube sections may be equal, and the resistivities of the plurality of tube sections may increase proportionally from the tube section closest to the inlet to the tube section closest to the outlet, so as to obtain the temperature gradient in which the temperature increases linearly from the inlet to the outlet.

The lengths of adjacent tube sections may be different from each other, and the resistivities of the plurality of tube sections may increase from the tube section closest to the inlet to the tube section closest to the outlet, so as to obtain the temperature gradient in which the temperature increases in a curve shape from the inlet to the outlet.

The resistivity of one tube section relatively close to the inlet may be greater than or equal to the resistivity of another tube section relatively close to the outlet so as to obtain the temperature gradient in which the temperature decreases from the inlet to the outlet.

The lengths of the plurality of tube sections may be equal, and the resistivities of the plurality of tube sections may decrease proportionally from the tube section closest to the inlet to the tube section closest to the outlet so as to obtain the temperature gradient in which the temperature decreases linearly from the inlet to the outlet.

The lengths of adjacent tube sections may be different from each other, and the resistivities of the plurality of tube sections may decrease from the tube section closest to the inlet to the tube section closest to the outlet. so as to obtain the temperature gradient in which the temperature decreases in a curve shape from the inlet to the outlet

The resistivities of some tube sections among the plurality of tube sections may be set to be relatively high and the lengths of the some tube sections among the plurality of tube sections may be set to be relatively long.

The resistivities of some tube sections among the plurality of tube sections may be set to be relatively low and the lengths of the some tube sections among the plurality of tube sections may be set to be relatively long.

The electric heating reactor may further include a cooler for cooling the pair of conductive sockets.

### [Advantageous Effects]

By implementing the temperature gradient appropriate to a reaction mechanism in high-temperature catalytic/non-catalytic chemical reactions, product yields may be maximized, a catalyst life may be improved, and a process time may be improved.

By controlling the temperature by each section according to exothermic and endothermic reactions, the occurrence of local hot spots or cold spots may be prevented, thereby improving the efficiency of the process.

Further, effects that can be obtained or expected from exemplary embodiments of the present disclosure are directly or suggestively described in the following detailed description. That is, various effects expected from exemplary embodiments of the present disclosure will be described in the following detailed description.

### [Description of the Drawings]

Embodiments of the present disclosure may be better understood by reference to the following description taken in conjunction with the accompanying drawings in which like reference numerals designate identical or functionally similar elements.
FIG. 1 is a schematic diagram illustrating an electric heating reactor according to a first embodiment of the present disclosure.
FIG. 2 is a view illustrating one example of a strategy for controlling a temperature of an electric heating reactor of FIG. 1.
FIG. 3 is a schematic diagram illustrating an electric heating reactor according to a second embodiment of the present disclosure.
FIG. 4 is a view illustrating one example of a strategy for controlling a temperature of an electric heating reactor of FIG. 3.
FIG. 5 is a schematic diagram illustrating an electric heating reactor according to a third embodiment of the present disclosure.
FIG. 6 is a view illustrating one example of a strategy for controlling a temperature of an electric heating reactor of FIG. 5.
FIG. 7 is a schematic diagram illustrating an electric heating reactor according to a fourth embodiment of the present disclosure.
FIG. 8 is a view illustrating one example of a strategy for controlling a temperature of an electric heating reactor of FIG. 7.
FIG. 9 is a schematic diagram illustrating an electric heating reactor according to a fifth embodiment of the present disclosure.
FIG. 10 is a view illustrating one example of a strategy for controlling a temperature of an electric heating reactor of FIG. 9.
FIG. 11 is a schematic diagram illustrating an electric heating reactor according to a sixth embodiment of the present disclosure.
FIG. 12 is a view illustrating one example of a strategy for controlling a temperature of an electric heating reactor of FIG. 11.

It should be understood that the above-referenced drawings are not necessarily to scale, presenting a somewhat simplified representation of various preferred features illustrative of the basic principles of the disclosure. The specific design features of the present disclosure, including, for example, specific dimensions, orientations, locations, and shapes, will be determined in part by the particular intended application and use environment.

### [Mode for Invention]

The terminology used herein is for the purpose of describing particular embodiments only, and is not intended to limit the present disclosure. As used herein, singular forms are also intended to include a plurality of forms, unless the context clearly indicates otherwise. It should be further understood that term "comprise" or "have" used in the present specification specifies the presence of stated features, numerals, steps, operations, components, parts, or a combination thereof, but does not preclude the presence or addition of one or more other features, numerals, steps, operations, components, parts, or a combination thereof. Also, as used herein, the term "and/or" includes any plurality of combinations of items or any of a plurality of listed items.

Additionally, it is to be understood that one or more of the following methods or aspects thereof may be executed by at least one controller. The term "controller" may refer to a hardware device that includes a memory and a processor. The memory is configured to store program instructions, and the processor is specifically programmed to execute the program instructions to perform one or more processes described in further detail below. The controller, as described herein, may control operations of units, modules, components, devices, or similar elements. Furthermore, it is to be understood that the following methods can be executed by a device that includes a controller along with one or more other components, as would be recognized by those skilled in the art.

Additionally, the controller of the present disclosure may be implemented as a non-transitory computer-readable recording medium containing executable program instructions executed by a processor. Examples of the computer-readable recording media include, but are not limited to, a ROM, a RAM, a compact disc (CD) ROM, a magnetic tape, a floppy disk, a flash drive, a smart card, and an optical data storage device. The computer-readable recording medium may also be distributed across a computer network so that program instructions can be stored and executed in a distributed manner, such as on a telematics server or a controller area network (CAN).

According to the present disclosure, an electric heating reactor includes an inlet formed on one side and an outlet formed on the other side, and includes a reaction tube having a passage formed therein through which a reactant passes and configured to heat the reactant passing through the passage, a power source configured to supply an electric power to the reaction tube, and a pair of conductive sockets electrically connecting the power source and the reaction tube. When an electric power of a power source is supplied to the reaction tube through the conductive socket, the reaction tube generates heat and heats the reactants therein. In this way, the present disclosure may efficiently heat the temperature inside the reactor by utilizing an electric heating technology.

The reaction tube includes a plurality of tube sections having a resistivity and a length. For example, the plurality of tube sections includes a first tube section having a first resistivity and a first length, and a second tube section having a second resistivity different from the first resistivity and a second length different from the first length and coupled to the first tube section. When the power from the power source is supplied to the reaction tube, the first and second tube sections, which have the different resistivity and length, generate heat at the different temperatures. Here, the number of tube sections is not limited to two. By arranging each of the plurality of tube sections in each of the plurality of sections, the temperature of the reactor may be controlled for each section. For example, to increase the temperature of the reactor in the direction in which the reactants flow, the resistivity of one tube section relatively close to the inlet is less than or equal to the resistivity of another tube section relatively far from the inlet. Conversely, to increase the temperature of the reactor in the direction in which the reactants flow, the resistivity of one tube section relatively close to the inlet is greater than or equal to the resistivity of the other tube section relatively far from the inlet. In another example, a desired temperature gradient may be created within the reactor by adjusting the lengths of the multiple tube sections having the different resistivities. For example, the tube section with the relatively high resistivity and the relatively long length may be placed in a section where cold spots are likely to occur in an endothermic reaction, or the tube section with the relatively low resistivity and the relatively long length may be placed in a section where hot spots are likely to occur in an exothermic reaction.

Additionally, the electric heating reactor further includes a cooler for cooling the conductive socket. The stability of the operation can be improved by suppressing the temperature rising of the conductive socket.

Hereinafter, embodiments of the present disclosure will be described in detail with reference to attached drawings.

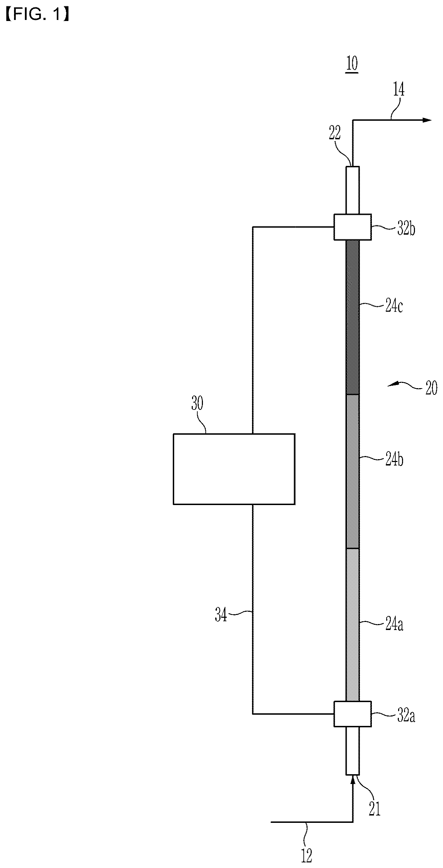

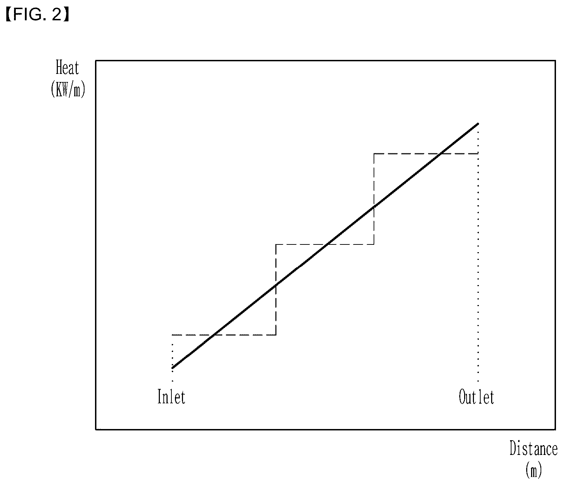

FIG. 1 is a schematic diagram illustrating an electric heating reactor according to a first embodiment of the present disclosure, and FIG. 2 is a view illustrating one example of a strategy for controlling a temperature of an electric heating reactor of FIG. 1.

As illustrated in FIG. 1, the electric heating reactor 10 according to the first embodiment of the present disclosure is configured to receive power, generate heat, and heat the reactants inside using the generated heat. The electric heating reactor 10 includes a reaction tube 20, a power source 30, and first and second conductive sockets 32a and 32b.

The reaction tube 20 is made of an alloy material having high resistivity (e.g., Ni-Cr, Fe-Cr, Fe-Ni-Cr, Fe-Cr-Al, etc.), and the passage through which the reactant passes is formed in the longitudinal direction inside the tube. For example, the reaction tube 20 may be formed in a circular pipe shape so that the passage may be formed in the longitudinal direction therein. When the power is applied to the reaction tube 20, the reaction tube 20 generates heat due to high resistivity thereof, and the generated heat may be used to heat the reactants passing through the passage.

The inlet 21 is formed at one end of the reaction tube 20, and a supply line 12 is connected to the inlet 21. The reactant is supplied into the reaction tube 20 through the supply line 12 and the inlet 21. The outlet 22 is formed at the other end of the above reaction tube 20, and a discharge line 14 is connected to the outlet 22. The product of which the reaction pass through the inside of the reaction tube 20 and has completed and/or the unreacted product that has not completed the reaction are discharged through the outlet 22 to the discharge line 14.

The reaction tube 20 includes first, second, and third tube sections 24a, 24b and 24c arranged in a row. The first tube section 24a is provided at one end of the reaction tube 20 and has a first resistivity ρ1 and a first length L1. The inlet 21 is formed at one end of the first tube section 24a, and the reactant flows into the reaction tube 20, particularly the first tube section 24a, through the inlet 21. The second tube section 24b is provided in the middle of the reaction tube 20, and one end of the second tube section 24b is connected to the other end of the first tube section 24a. The second tube section 24b has a second resistivity ρ2 different from the first resistivity and a second length L2 that is equal to or different from the first length. The third tube section 24c is provided at the other end of the reaction tube 20, and one end of the third tube section 24c is connected to the other end of the second tube section 24b. The third tube section 24c has a third resistivity ρ3 that is equal to or different from the first resistivity and different from the second resistivity, and a third length L3 that is equal to or different from the first and second lengths. The outlet 22 is formed at the other end of the third tube section 24c, and the reactant that have completed the reaction and/or unreacted substances that have not completed the reaction are discharged from the reaction tube 20, particularly the third tube section 24c, through the outlet 22.

The first passage formed inside the first tube section 24a is connected to the second passage formed inside the second tube section 24b, and the second passage formed inside the second tube section 24b is connected to the third passage formed inside the third tube section 24c. The diameters of the first, second and third passages may be equal or nearly equal. Accordingly, the reactant introduced into the first passage through the inlet 21 is reacted while passing through the first, second, and third passages inside the reaction tube 20 in sequence and are discharged from the third passage through the outlet 22. Additionally, since the diameters of the first, second, and third passages are the same or nearly the same, the flow resistance of the reactants passing through the first, second, and third passages does not increase.

The first, second, and third resistivities and the first, second, and third lengths may be set according to the desired temperature gradient within the reaction tube 20. For example, as shown in FIG. 2, if the temperature gradient (referring to a solid line in FIG. 2) in which the temperature within the reaction tube 20 increases in a straight line from the inlet 21 to the outlet 22 is required, the first, second, and third lengths are set to be equal to each other, the first resistivity is set to be the smallest, the third resistivity is set to be the largest, and the second resistivity is set to be larger than the first resistivity and smaller than the third resistivity. Additionally, preferably, the difference between the second resistivity and the first resistivity may be set to be equal to the difference between the third resistivity and the second resistivity. In this case, the heat actually generated in the first, second, and third tube sections 24a, 24b, and 24c increases in a stepwise manner from the first tube section 24a to the third tube section 24c (referring to a dotted line in FIG. 2).

The power source 30 is configured to supply the power to the reaction tube 20. The power source 30 may be an AC power source or a DC power source.

The first and second conductive sockets 32a and 32b may supply the power from the power source 30 to the reaction tube 20 so that the reaction tube 20 generates heat. The first conductive socket 32a is mounted on one end of the first tube section 24a and electrically connects the power source 30 and the first tube section 24a via a wire 34. Additionally, the second conductive socket 32b is mounted on the other end of the third tube section 24c and electrically connects the power source 30 and the third tube section 24c via a wire 34. The power from the same power source 30 is transmitted to the first, second, and third tube sections 24a, 24b, and 24c through the first and second conductive sockets 32a and 32b, but since the first, second, and third resistivities of the first, second, and third tube sections 24a, 24b, and 24c are different from each other, the first, second, and third tube sections 24a, 24b, and 24c generate heat at different temperatures. Therefore, the temperatures of the first, second, and third tube sections 24a, 24b, and 24c may be set differently through the wiring with only one power source 30, thereby obtaining a desired temperature gradient.

Meanwhile, a cooler (not shown) is provided in or near the first and second conductive sockets 32a and 32b to cool the first and second conductive sockets 32a and 32b.

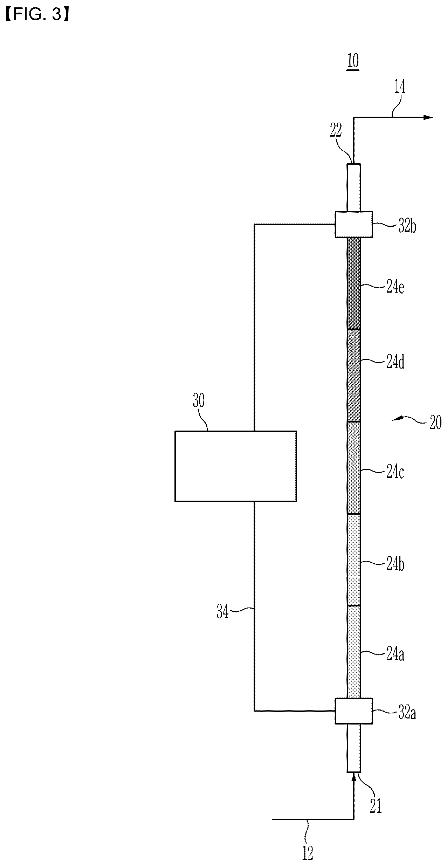

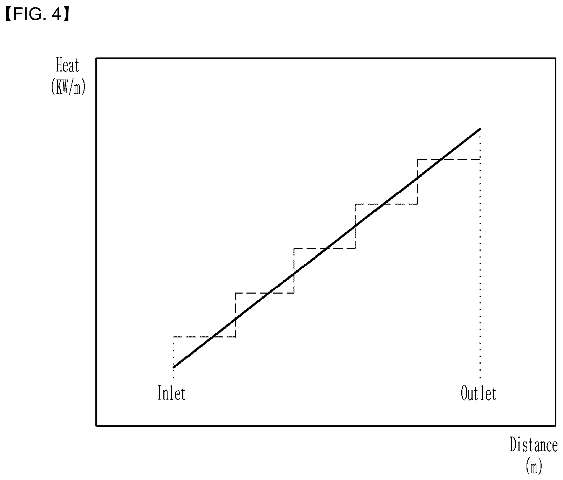

FIG. 3 is a schematic diagram illustrating an electric heating reactor according to a second embodiment of the present disclosure, and FIG. 4 is a view illustrating one example of a strategy for controlling a temperature of an electric heating reactor of FIG. 3.

As illustrated in FIG. 3, an electric heating reactor 10 according to a second embodiment of the present disclosure includes a reaction tube 20, a power source 30, and first and second conductive sockets 32a and 32b. Here, the electric heating reactor 10 according to the second embodiment of the present disclosure is identical to the electric heating reactor 10 according to the first embodiment of the present disclosure except for the number of tube sections included in the reaction tube 20. Therefore, only the reaction tube 20 will be described.

The reaction tube 20 includes first, second, third, fourth, and fifth tube sections 24a, 24b, 24c, 24d, and 24e arranged in a row. The first tube section 24a is provided at one end of the reaction tube 20 and has a first resistivity and a first length L1. An inlet 21 is formed at one end of the first tube section 24a, and the reactant flows into the reaction tube 20, particularly the first tube section 24a, through the inlet 21. The second tube section 24b is provided adjacent to the first tube section 24a, and one end of the second tube section 24b is connected to the other end of the first tube section 24a. The second tube section 24b has a second resistivity ρ2 different from the first resistivity and a second length L2 that is equal to or different from the first length. The third tube section 24c is provided adjacent to the second tube section 24b, and one end of the third tube section 24c is connected to the other end of the second tube section 24b. The third tube section 24c has a third resistivity ρ3 that is equal to or different from the first resistivity and different from the second resistivity, and a third length L3 that is equal to or different from the first and second lengths. The fourth tube section 24d is provided adjacent to the third tube section 24c, and one end of the fourth tube section 24d is connected to the other end of the third tube section 24c. The fourth tube section 24d has a fourth resistivity ρ4 that is equal to or different from the first and second resistivities and different from the third resistivity, and a fourth length L4 that is equal to or different from the first, second, and third lengths. The fifth tube section 24e is provided at the other end of the reaction tube 20, and one end of the fifth tube section 24e is connected to the other end of the fourth tube section 24d. The fifth tube section 24e has a fifth resistivity ρ5 that is equal to or different from the first, second, and third resistivities and different from the fourth resistivity, and a fifth length L5 that is equal to or different from the first, second, third, and fourth lengths. An outlet 22 is formed at the other end of the fifth tube section 24e, and a reactant that have completed the reaction and/or an unreacted substance that have not completed the reaction are discharged from the reaction tube 20, particularly the fifth tube section 24e, through the outlet 22.

The first passage formed inside the first tube section 24a is connected to the second passage formed inside the second tube section 24b, the second passage formed inside the second tube section 24b is connected to the third passage formed inside the third tube section 24c, the third passage formed inside the third tube section 24c is connected to the fourth passage formed inside the fourth tube section 24d, and the fourth passage formed inside the fourth tube section 24d is connected to the fifth passage formed inside the fifth tube section 24e. The diameters of the first, second, third, fourth and fifth passages may be equal or nearly equal. Accordingly, the reactant introduced into the first passage through the inlet 21 reacts while passing through the first, second, third, fourth, and fifth passages inside the reaction tube 20 in sequence and is discharged from the fifth passage through the outlet 22. In addition, since the diameters of the first, second, third, fourth, and fifth passages are the same or nearly the same, the flow resistance of the reactant passing through the first, second, third, fourth, and fifth passages does not increase.

The first, second, third, fourth, and fifth resistivities and the first, second, third, fourth, and fifth lengths may be set according to the desired temperature gradient within the reaction tube 20. For example, as shown in FIG. 4, if the temperature gradient (referring to a solid line in FIG. 4) is required in which the temperature within the reaction tube 20 increases linearly from the inlet 21 to the outlet 22, the first, second, third, fourth, and fifth lengths are set to be equal to each other, and the first, second, third, fourth, and fifth resistivities are set to increase gradually from the smallest first resistivity to the largest fifth resistivity. Additionally, preferably, the difference between the second resistivity and the first resistivity, the difference between the third resistivity and the second resistivity, the difference between the fourth resistivity and the third resistivity, and the difference between the fifth resistivity and the fourth resistivity can be set to be equal to each other. In this case, the heat actually generated in the first, second, third, fourth, and fifth tube sections 24a, 24b, 24c, 24d, and 24e increases in a stepwise manner from the first tube section 24a to the fifth tube section 24e (referring to a dotted line in FIG. 4).

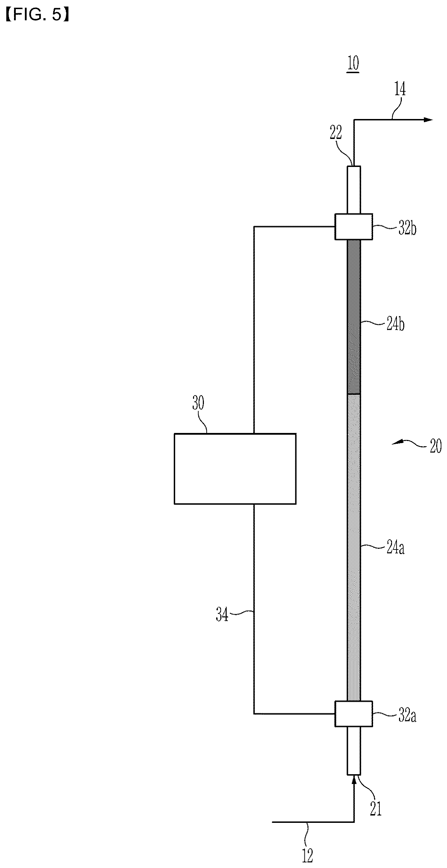

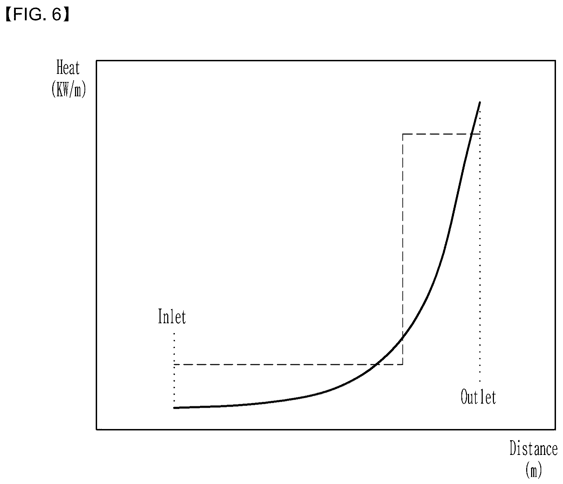

FIG. 5 is a schematic diagram illustrating an electric heating reactor according to a third embodiment of the present disclosure, and FIG. 6 is a view illustrating one example of a strategy for controlling a temperature of an electric heating reactor of FIG. 5.

As illustrated in FIG. 5, an electric heating reactor 10 according to a third embodiment of the present disclosure includes a reaction tube 20, a power source 30, and first and second conductive sockets 32a and 32b. Here, the electric heating reactor 10 according to the third embodiment of the present disclosure is identical to the electric heating reactor 10 according to the first embodiment of the present disclosure except for the number of tube sections included in the reaction tube 20. Therefore, only the reaction tube 20 will be described.

The reaction tube 20 includes first and second tube sections 24a and 24b arranged in a row. The first tube section 24a is provided at one end of the reaction tube 20 and has a first resistivity and a first length L1. An inlet 21 is formed at one end of the first tube section 24a, and the reactant flows into the reaction tube 20, particularly the first tube section 24a through the inlet 21. The second tube section 24b is provided at the other end of the reaction tube 20, and one end of the second tube section 24b is connected to the other end of the first tube section 24a. The second tube section 24b has a second resistivity ρ2 different from the first resistivity and a second length L2 that is equal to or different from the first length. An outlet 22 is formed at the other end of the second tube section 24b, and a reactant that have completed the reaction and/or an unreacted substance that have not completed the reaction are discharged from the reaction tube 20, particularly the second tube section 24b, through the outlet 22.

The first passage formed inside the first tube section 24a is connected to the second passage formed inside the second tube section 24b, and the diameters of the first and second passages may be the same or nearly similar. Accordingly, the reactant introduced into the first passage through the inlet 21 reacts while passing through the first and second passages inside the reaction tube 20 in sequence and is discharged from the second passage through the outlet 22. Additionally, since the diameters of the first and second passages are the same or nearly the same, the flow resistance of the reactants passing through the first and second passages does not increase.

The first and second resistivities and the first and second lengths may be set according to the desired temperature gradient within the reaction tube 20. For example, as shown in FIG. 6, the temperature within the reaction tube 20 increases in a curve from the inlet 21 to the outlet 22, but if a temperature gradient (referring to a solid line in FIG. 6) is required in which it increases gradually in the first tube section 24a and increases sharply in the second tube section 24b, the first length is set longer than the second length, and the first resistivity is set smaller than the second resistivity. In this case, the heat actually generated in the first and second tube sections 24a and 24b increases in a stepwise manner from the first tube section 24a to the second tube section 24b (referring to a dotted line in FIG. 6).

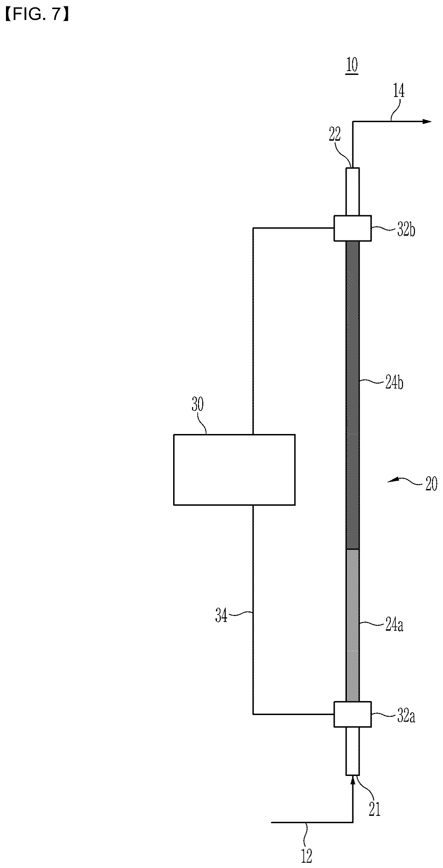

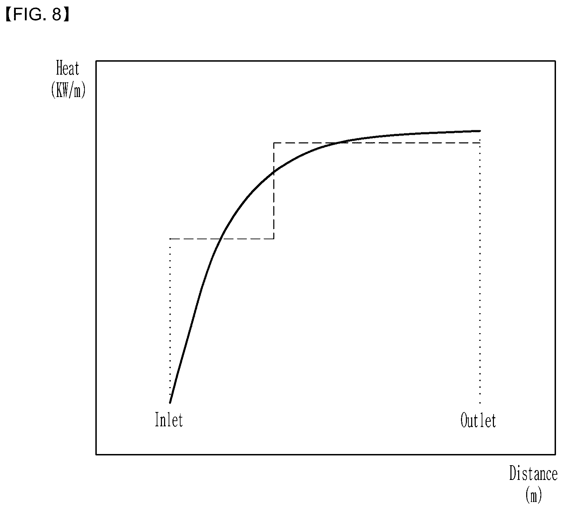

FIG. 7 is a schematic diagram illustrating an electric heating reactor according to a fourth embodiment of the present disclosure, and FIG. 8 is a view illustrating one example of a strategy for controlling a temperature of an electric heating reactor of FIG. 7.

As illustrated in FIG. 7, an electric heating reactor 10 according to a fourth embodiment of the present disclosure includes a reaction tube 20, a power source 30, and first and second conductive sockets 32a and 32b. Here, the electric heating reactor 10 according to the fourth embodiment of the present disclosure is identical to the electric heating reactor 10 according to the third embodiment of the present disclosure except for the first and second resistivities and the first and second lengths for creating a desired temperature gradient. Therefore, only the first and second resistivities and the first and second lengths for creating the desired temperature gradient will be explained.

As shown in Fig. 8, the temperature within the reaction tube 20 increases in a curve from the inlet 21 to the outlet 22, but if a temperature gradient (referring to a solid line in FFIG. 8) is required in which it increases rapidly in the first tube section 24a and gradually increases in the second tube section 24b, the first length is set shorter than the second length, and the first resistivity is set smaller than the second resistivity. In this case, the heat actually generated in the first and second tube sections 24a and 24b increases in a stepwise manner from the first tube section 24a to the second tube section 24b (referring to a dotted line in FIG. 8).

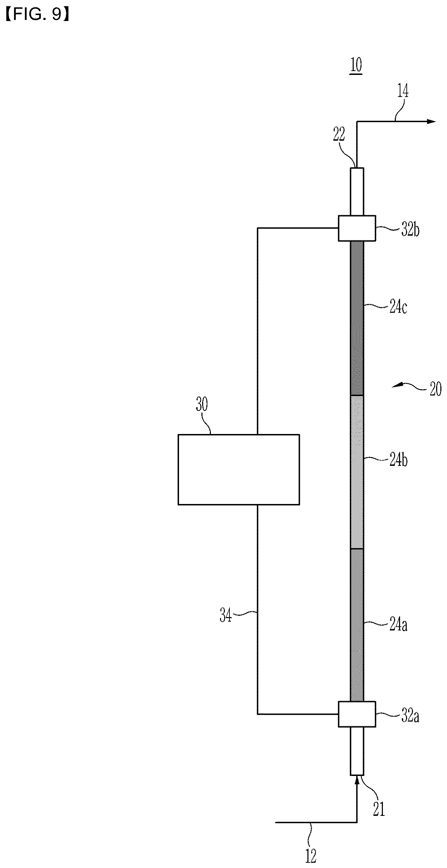

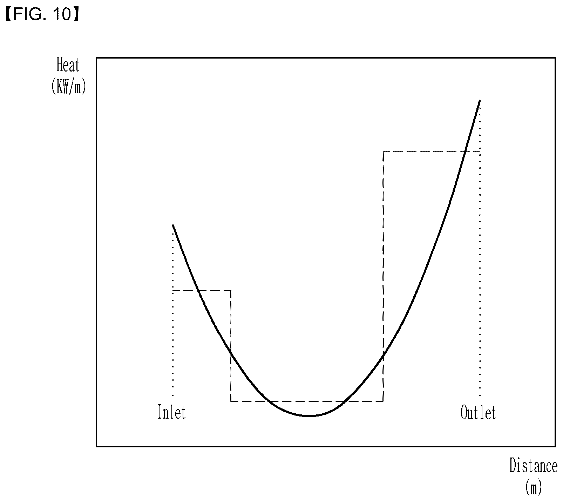

FIG. 9 is a schematic diagram illustrating an electric heating reactor according to a fifth embodiment of the present disclosure, and FIG. 10 is a view illustrating one example of a strategy for controlling a temperature of an electric heating reactor of FIG. 9.

As illustrated in FIG. 9, an electric heating reactor 10 according to a fifth embodiment of the present disclosure includes a reaction tube 20, a power source 30, and first and second conductive sockets 32a and 32b. Here, the electric heating reactor 10 according to the fifth embodiment of the present disclosure is identical to the electric heating reactor 10 according to the first embodiment of the present disclosure except for the first, second, and third resistivity and the first, second, and third lengths for creating a desired temperature gradient. Therefore, only the first, second, and third resistivities and the first, second, and third lengths for creating the desired temperature gradient will be explained.

As shown in FIG. 10, if a temperature gradient (referring to a solid line in FIG. 10) is required in which the temperature decreases in a curved manner from the first tube section 24a to the second tube section 24b and the temperature increases in a curved manner from the second tube section 24b to the third tube section 24c, the second resistivity is set to be smaller than the first and third resistivities. Here, the first, second, and third resistivity and the first, second, and third lengths may be set according to the shape of the desired temperature gradient by a person skilled in the art. In this case, the heat actually generated in the first, second, and third tube sections 24a, 24b, and 24c decreases in a stepwise manner from the first tube section 24a to the second tube section 24b and increases in a stepwise manner from the second tube section 24b to the third tube section 24c (referring to a dotted line in FIG. 10).

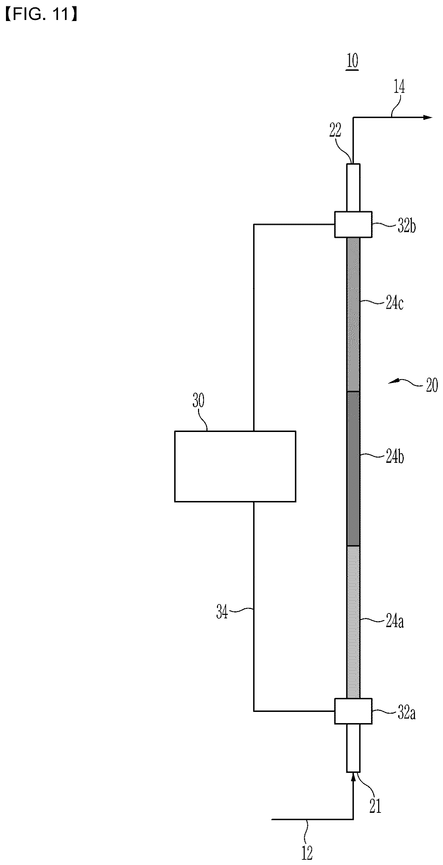

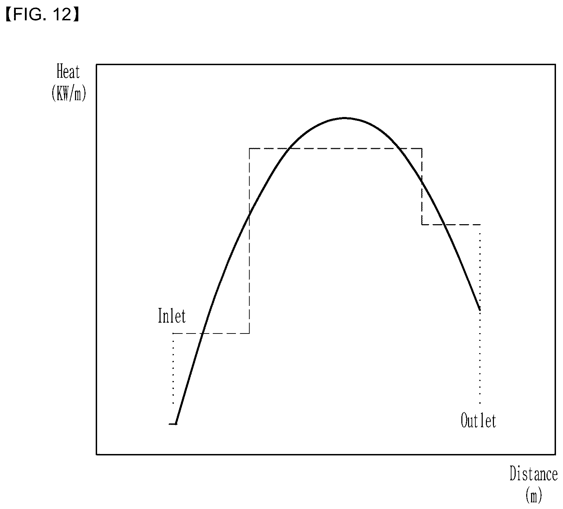

FIG. 11 is a schematic diagram illustrating an electric heating reactor according to a sixth embodiment of the present disclosure, and FIG. 12 is a view illustrating one example of a strategy for controlling a temperature of an electric heating reactor of FIG. 11.

As illustrated in FIG. 11, an electric heating reactor 10 according to the sixth embodiment of the present disclosure includes a reaction tube 20, a power source 30, and first and second conductive sockets 32a and 32b. Here, the electric heating reactor 10 according to the sixth embodiment of the present disclosure is identical to the electric heating reactor 10 according to the first embodiment of the present disclosure except for the first, second, and third resistivity and the first, second, and third lengths for creating a desired temperature gradient. Therefore, only the first, second, and third resistivities and the first, second, and third lengths for creating the desired temperature gradient will be explained.

As shown in Fig. 12, if a temperature gradient (referring to a solid line in FIG. 12) is required in which the temperature increases in a curved manner from the first tube section 24a to the second tube section 24b and decreases in a curved manner from the second tube section 24b to the third tube section 24c, the second resistivity is set to be greater than the first and third resistivities. Here, the first, second, and third resistivity and the first, second, and third lengths may be set according to the shape of the desired temperature gradient by a person skilled in the art. In this case, the heat actually generated in the first, second, and third tube sections 24a, 24b, and 24c increases in a stepwise manner from the first tube section 24a to the second tube section 24b and decreases in a stepwise manner from the second tube section 24b to the third tube section 24c (referring to a dotted line in FIG. 12).

While this invention has been described in connection with what is presently considered to be practical exemplary embodiments, it is to be understood that the invention is not limited to the disclosed embodiments. On the contrary, it is intended to cover various modifications and equivalent arrangements included within the spirit and scope of the appended claims.

## Claims

1. An electrical heating reactor comprising:
a reaction tube having an inlet formed at one end and an outlet formed at the other end, and having a passage formed inside through which a reactant passes;
a power source configured to supply a power to the reaction tube to heat the reactant passing through the passage; and
a pair of conductive sockets connected to the power source via a wire to allow a current to flow through the reaction tube,
wherein the reaction tube includes a plurality of tube sections, each having a resistivity and a length, and
the resistivity of one tube is different from that of the adjacent other tube, and the length of one tube is equal to or different from that of the other tube.

2. The electrical heating reactor of claim 1, wherein:
a temperature gradient within the reaction tube is obtained by controlling the resistivity and the length of each of the plurality of tube sections.

3. The electrical heating reactor of claim 2, wherein:
the resistivity of one tube section relatively close to the inlet is less than or equal to the resistivity of another tube section relatively close to the outlet so as to obtain the temperature gradient in which the temperature increases from the inlet to the outlet.

4. The electrical heating reactor of claim 3, wherein:
the lengths of the plurality of tube sections are equal, and the resistivities of the plurality of tube sections increase proportionally from the tube section closest to the inlet to the tube section closest to the outlet, so as to obtain the temperature gradient in which the temperature increases linearly from the inlet to the outlet.

5. The electrical heating reactor of claim 3, wherein:
the lengths of adjacent tube sections are different from each other, and the resistivities of the plurality of tube sections increase from the tube section closest to the inlet to the tube section closest to the outlet, so as to obtain the temperature gradient in which the temperature increases in a curve shape from the inlet to the outlet.

6. The electrical heating reactor of claim 2, wherein:
the resistivity of one tube section relatively close to the inlet is greater than or equal to the resistivity of another tube section relatively close to the outlet so as to obtain the temperature gradient in which the temperature decreases from the inlet to the outlet.

7. The electrical heating reactor of claim 6, wherein:
the lengths of the plurality of tube sections are equal, and the resistivities of the plurality of tube sections decrease proportionally from the tube section closest to the inlet to the tube section closest to the outlet so as to obtain the temperature gradient in which the temperature decreases linearly from the inlet to the outlet.

8. The electrical heating reactor of claim 6, wherein:
the lengths of adjacent tube sections are different from each other, and the resistivities of the plurality of tube sections decrease from the tube section closest to the inlet to the tube section closest to the outlet so as to obtain the temperature gradient in which the temperature decreases in a curve shape from the inlet to the outlet

9. The electrical heating reactor of claim 2, wherein:
the resistivities of some tube sections among the plurality of tube sections are set to be relatively high and the lengths of the some tube sections among the plurality of tube sections are set to be relatively long.

10. The electrical heating reactor of claim 2, wherein:
the resistivities of some tube sections among the plurality of tube sections are set to be relatively low and the lengths of the some tube sections among the plurality of tube sections are set to be relatively long.

11. The electrical heating reactor of claim 1, further comprising:
a cooler for cooling the pair of conductive sockets.
